# EUROPEAN PATENT APPLICATION

(11) **EP 2 503 746 A1**
(43) Date of publication of application: **26.09.2012**
(21) Application number: 12152071.2
(22) Date of filing: 23.01.2012
(51) Int. Cl.: H04L 12/56, H04L 12/46

(54) **Data transfer apparatus, data transfer method, and information processing apparatus**

(30) Priority: 25.03.2011 JP 2011068863
(71) Applicant: Fujitsu Limited, Kawasaki-shi, Kanagawa 211-8588 (JP)
(72) Inventor: Negishi, Tatsuhiko, Kanagawa, 211-8588 (JP); Shirase, Kenji, Kanagawa, 211-8588 (JP); Ogami, Syougo, Kanagawa, 211-8588 (JP)
(74) Representative: HOFFMANN EITLE

(57) **Abstract**

A data transfer apparatus (310) which transfers data sent from a first apparatus (330) to a second apparatus (320), the data transfer apparatus including a first storage unit (432,433) to store first data sent from the first apparatus, a second storage unit (434) to store management information which manages a transmission state of transmission of the first data stored by the first storage unit (432,433) to the second apparatus, a determination unit (434) to dynamically determine a size of second data to be transferred to the second apparatus, in accordance with the transmission state, and a transmission unit (435) to generate and transmit, to the second apparatus, the second data of the determined size which includes one or more pieces of the first data.

## Description

### FIELD

The embodiments discussed herein are related to a data transfer apparatus that transfers data, a data transfer method, and an information processing apparatus.

### BACKGROUND

Conventionally, information processing apparatuses and the like have included a data transfer apparatus to transfer data between the apparatuses.

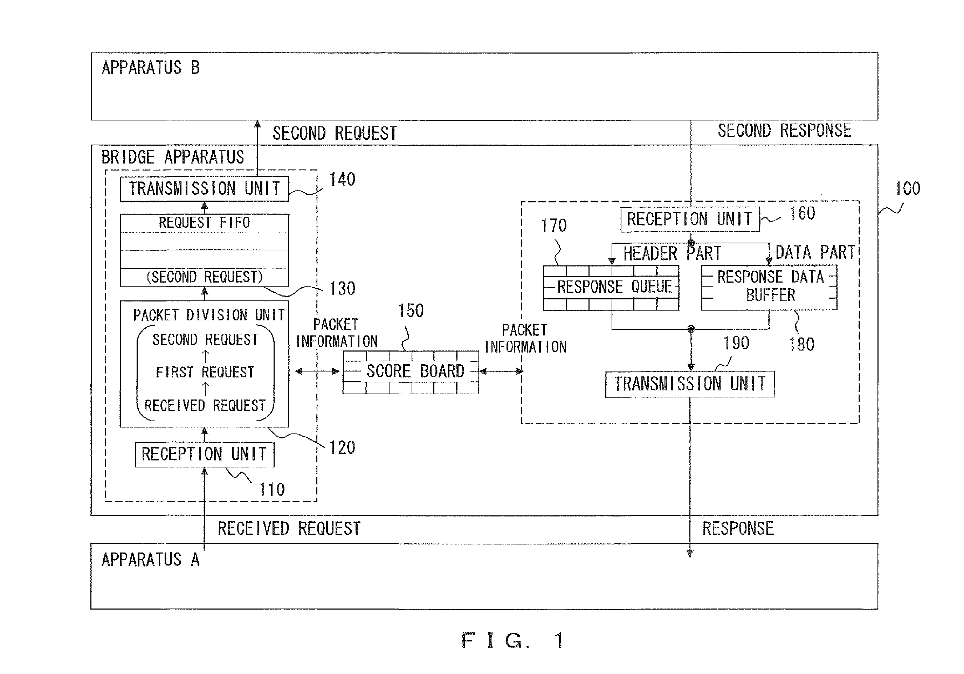

FIG. 1 is a diagram illustrating a bridge apparatus 100 as an example of a data transfer apparatus. Data is communicated in the form of a packet between an apparatus A and the bridge apparatus 100 and between the bridge apparatus 100 and an apparatus B.

As an example, a reception unit 110 receives a request from the apparatus A. Hereinafter, a request received from another apparatus, e.g., the apparatus A, will be referred to as a "received request". A packet division unit 120 divides the received request into one or more requests. Specifically, the packet division unit 120 divides data requested by the received request into divisions each having a size less than or equal to a max payload size, i.e., a maximum data size which may be transmitted and received at a time between the apparatus A and the bridge 100, and the packet division unit 120 generates a new request for each piece of the data. Hereinafter, each request obtained through the dividing above will be referred to as a "first request".

In addition, the packet division unit 120 divides the first request into one or more requests, if needed. Specifically, the packet division unit 120 divides data requested by the first request into divisions which each have a data size such that it may be transmitted and received between the bridge 100 and the apparatus B, and the packet division unit 120 generates a new request for each piece of the data. Hereinafter, each request obtained through the dividing above will be referred to as a "second request".

The packet division unit 120 stores the second requests obtained through the dividing into a request FIFO (First-In-First-Out) 130. A transmission unit 140 sequentially transmits, to the apparatus B, the second requests stored in the request FIFO 130.

Meanwhile, the packet division unit 120 stores packet information of the received request into a score board 150. The packet information includes a command and a tag included in the received request, the number of divisions, and the like. The command includes, for example, a read instruction, a write instruction, and the like. The tag is identification information for identifying the received request. The number of divisions is the number of the second requests eventually obtained by dividing the received request.

In the meantime, a reception unit 160 receives a response to the second request transmitted from the apparatus B. Since this response is a response to the second request, it will be hereinafter referred to as a "second response". The reception unit 160 stores a header part included in the second response into a response queue 170. The reception unit 160 also stores a data part included in the second response in a response data buffer 180. In this case, every time storing of the second response into the response queue 170 and the response data buffer 180 is finished, the reception unit 160 decrements a count value by 1, wherein the number of divisions included in the score board 150 is defined as an initial value. When the count value becomes 0, the reception unit 160 clears, from the score board 150, the packet information of the received request for which the count value has become 0.

A transmission unit 190 waits until the total size of the responses from the apparatus B, i.e., the total size of the second responses to the second requests eventually obtained by dividing the received request, becomes, for example, the max payload size. When the total size of the received second responses becomes the max payload size, the transmission unit 190 generates a response by extracting the second responses stored in the response queue 170 and the response data buffer 180. The transmission unit 190 then transmits the generated response to the apparatus A.

In regard to the aforementioned technology, an edge node is known which determines the frame length of a super frame accommodating packets belonging to the same aggregation and having a length that is less than or equal to a predetermined length, in accordance with a predetermined priority of received user packets and load information in a light wave network.
[Patent Document 1] Japanese Laid-open Patent Publication No.2001-007854

### SUMMARY

It is an object in one aspect of the embodiment to improve latency at the time of data transfer.

According to an aspect of the embodiment, the data transfer apparatus transfers, to a second apparatus, data sent from a first apparatus. The data transfer apparatus includes the following elements.

A first storage unit stores first data sent from the first apparatus.

A second storage unit stores management information which manages the transmission state of the transmission of the first data stored by the first storage unit to the second apparatus.

A determination unit dynamically determines the size of second data to be transmitted to the second apparatus, in accordance with the transmission state.

A transmission unit generates and transmits, to the second apparatus, the second data of the determined size, which includes one or more pieces of the first data.

### BRIEF DESCRIPTION OF DRAWINGS

FIG. 1 is a diagram illustrating a bridge apparatus 100 as an example of a data transfer apparatus.
FIG. 2 is a diagram illustrating latency of a response to the received request from the apparatus A, in regard to the bridge apparatus 100.
FIG. 3 is a diagram illustrating an exemplary configuration of an information processing apparatus 300 according to the embodiment.
FIG. 4 is a diagram illustrating an outline of a Root Complex 310 illustrated in FIG. 3.
FIG. 5 is a diagram illustrating an example of a score board 420 illustrated in FIG. 4.
FIG. 6 is a diagram illustrating an exemplary configuration of an egress processing unit 430.
FIG. 7 is a diagram illustrating an issuance control state machine.
FIG. 8 is a diagram illustrating an exemplary configuration of a state machine table 800.
FIG. 9 is a flowchart illustrating an outline of a packet generation process of the egress processing unit 430 illustrated in FIG. 6.
FIG. 10 is a diagram illustrating an example of a process for determining a payload size (step S903).
FIG. 11 is a diagram illustrating an example of an effect achieved by a data transfer process according to the embodiment.
FIG. 12 is a diagram illustrating an example of an effect achieved by a data transfer process according to the embodiment.

### DESCRIPTION OF EMBODIMENTS

The apparatus B transmits, to the bridge apparatus 100 described above, the second responses to the second requests from the bridge apparatus 100, under a different latency for each of the second responses. Accordingly, the bridge apparatus 100 needs to wait until it receives a response to the first request, i.e., all of the second responses to the second requests which are divisions of the first request.

As an example, when the max payload size is large, the number of the second requests obtained by dividing the first request becomes large, and hence the number of the second responses to the second requests also becomes large. Accordingly, there is also a long waiting time before all of the second responses are received. As a result, the bridge apparatus 100 will have an increased latency in transmitting a response to the received request from the apparatus A.

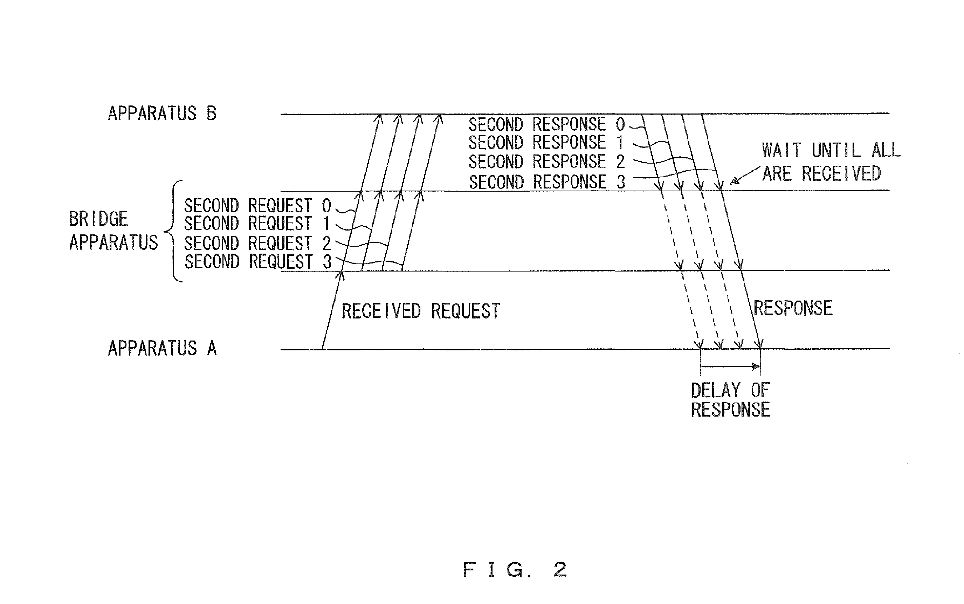

FIG. 2 is a diagram illustrating a latency of a response to the received request from the apparatus A, in regard to the bridge apparatus 100.

When the bridge apparatus 100 receives a request from the apparatus A, the bridge apparatus 100 eventually divides the received request into one or more second requests. For simplicity, FIG. 2 illustrates a case in which the received request is divided into a single first request and this first request is further divided into four second requests 0, 1, 2 and 3.

The bridge apparatus 100 transmits the second requests 0, 1, 2 and 3 in sequence to the apparatus B. The apparatus B then transmits, to the bridge apparatus 100, second responses 0, 1, 2 and 3 to the second requests 0, 1, 2 and 3.

In this case, the bridge apparatus 100 needs to wait until the bridge apparatus 100 receives the response to the first request, i.e., all of the second responses 0, 1, 2 and 3. Since a response is transmitted to the apparatus A after all of the second responses 0, 1, 2 and 3 are received, the response from the bridge apparatus 100 to the apparatus A is delayed by a waiting time which is needed to receive all of the second responses 0, 1, 2 and 3.

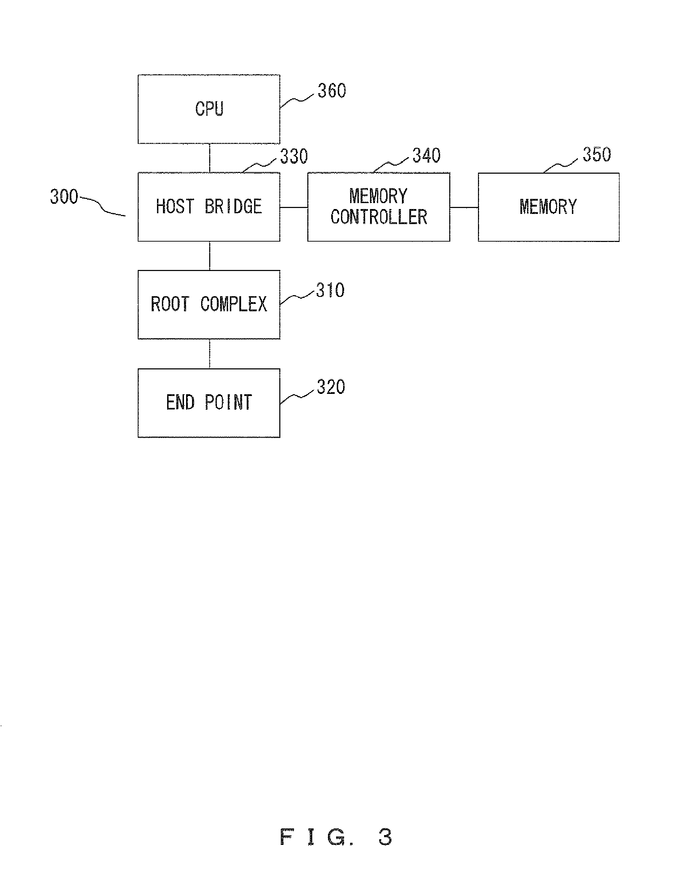

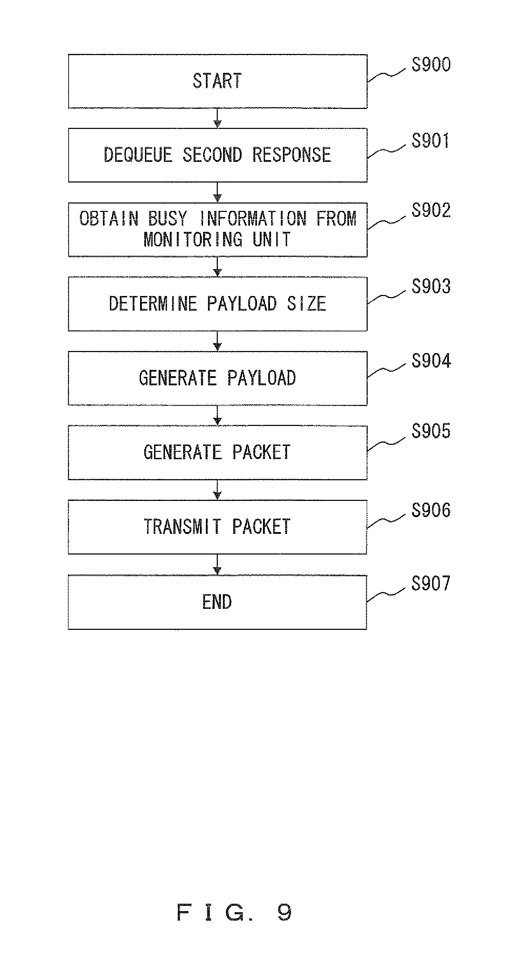

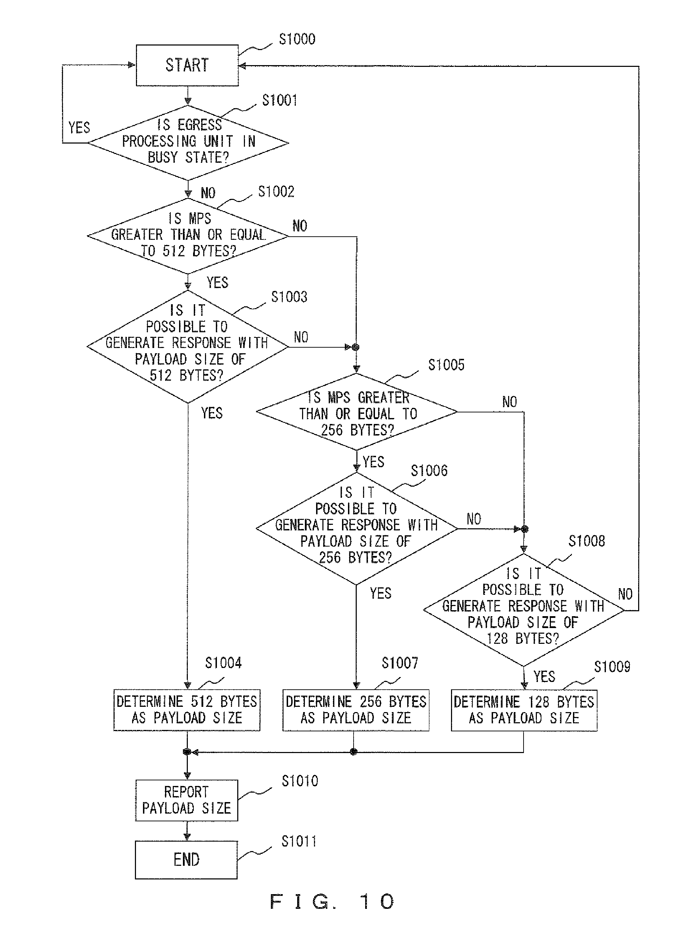

In the following, one example of the embodiment will be described on the basis of FIGs. 3 to 12. The embodiment described below is merely an example, and does not intend to exclude various modifications and applications of the technique, which are not clearly demonstrated below. Namely, this embodiment may be implemented by being variously modified, such as by combining the embodiments within a scope that does not depart from the gist of this embodiment. The processing procedures illustrated in the form of a flowchart in FIGs. 9 and 10 do not limit the order of the process; accordingly, the order of the process may be changed if possible.

FIG. 3 is a diagram illustrating an exemplary configuration of an information processing apparatus 300 according to the embodiment.

The information processing apparatus 300 includes a Root Complex 310, an end point 320, a host bridge 330, a memory controller 340, a memory 350, and a CPU (Central Processing Unit) 360.

The Root Complex 310 and the end point 320 are connected to each other via a PCI (Peripheral Component Interconnect) Express bus. The Root Complex 310 and the host bridge 330 are connected via a Parallel bus. The host bridge 330, the memory controller 340, and the memory 350 are connected via a Parallelbus.

The Root Complex 310 connects the host bridge 330 to the end point 320 or to an I/O apparatus connected to the end point 320. The Root Complex 310 performs protocol conversion to mutually transmit packets of the PCI Express transmitted from the end point 320 and packets conforming to the protocol of the host bridge 330.

The end point 320 is an apparatus located at the end of the I/O structure of the PCI Express. The end point 320 may be an I/O apparatus using the PCI Express. The end point 320 may also be an interface for connecting a device other than the PCI Express.

The host bridge 330 connects the CPU 360 to a PCI bus and controls the data communication.

The memory controller 140 writes data into or reads data from the memory 350 at a request from the CPU 360, the end point 320, or the like.

The memory 350 is a volatile memory which stores a program executed by the CPU 360, data, and the like. A volatile memory, such as RAM (Random Access Memory), may be used as the memory 350.

The CPU 360 is an arithmetic apparatus which executes a program stored in the memory 350.

In regard to the configuration above, a case will be considered in which the end point 320 issues a DMA (Direct Memory Access) request.

As an example, when the end point 320 receives a DMA request from an I/O apparatus operated under the end point 320, the end point 320 transmits the DMA request to the Root Complex 310. Upon receipt of the DMA requests from the end point 320, the Root Complex 310 transfers, to the host bridge 330, the DMA request received from the end point 320.

In this case, the Root Complex 310 divides the received DMA request into one or more DMA requests. In particular, the Root Complex 310 eventually divides data requested by the received DMA request into pieces, each of which is sized so that it may be communicated between the Root Complex 310 and the memory controller 340. The Root Complex 310 then generates a new DMA request for each of the data. Subsequently, the Root Complex 310 transmits the divided DMA request to the host bridge 330.

When the memory controller 340 receives the DMA request transmitted via the host bridge 330, the memory controller 340 reads data requested by the DMA request from the memory 350. The memory controller 340 then transmits the read data to the host bridge 330 as a response to the DMA request.

The Root Complex 310 receives the response to the DMA request transmitted via the host bridge 330. When the total size of the one or more received responses becomes a predetermined payload size, the Root Complex 310 generates and transfers a response having a predetermined payload to the end point 320. When the end point 320 receives the response from the Root Complex 310, the end point 320 transmits the data to the I/O apparatus which issued the DMA request.

In the DMA transfer process above, data is communicated in the form of a packet between the rote complex 310 and the end point 320 and between the Root Complex 310, the host bridge 330, and the memory controller 340.

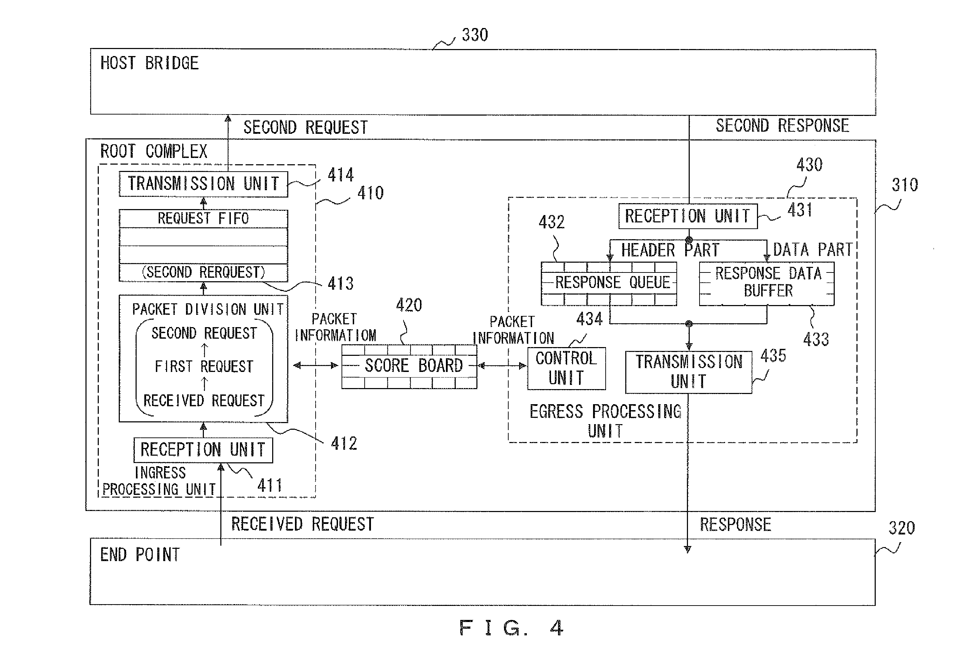

FIG. 4 is a diagram illustrating an outline of the Root Complex 310 illustrated in FIG. 3.

The Root Complex 310 includes an ingress processing unit 410, a score board 420, and an egress processing unit 430.

The ingress processing unit 410 includes a reception unit 411, a packet division unit 412, a request FIFO 413, and a transmission unit 414.

The reception unit 411 receives a request from the end point 320. The reception unit 411 then outputs the received request to the packet division unit 412.

The packet division unit 412 divides the received request into one or more first requests. In particular, the packet division unit 412 divides data requested by the received request into divisions each having a payload which is less than or equal to the max payload size, and the packet division unit 412 generates the first request for each of the divided data. The max payload according to the embodiment is the maximum data size of data which may be communicated at one time between the end point 320 and the Root Complex 310.

In addition, the packet division unit 412 divides the first request into one or more second requests. In particular, the packet division unit 412 divides data requested by the first request into pieces, each is sized so that it can be received between the Root Complex 310 and the host bridge 330, and the packet division unit 412 then generates the second request for each piece of the divided data.

When the packet dividing is completed, the packet division unit 412 stores the second request in the request FIFO 413.

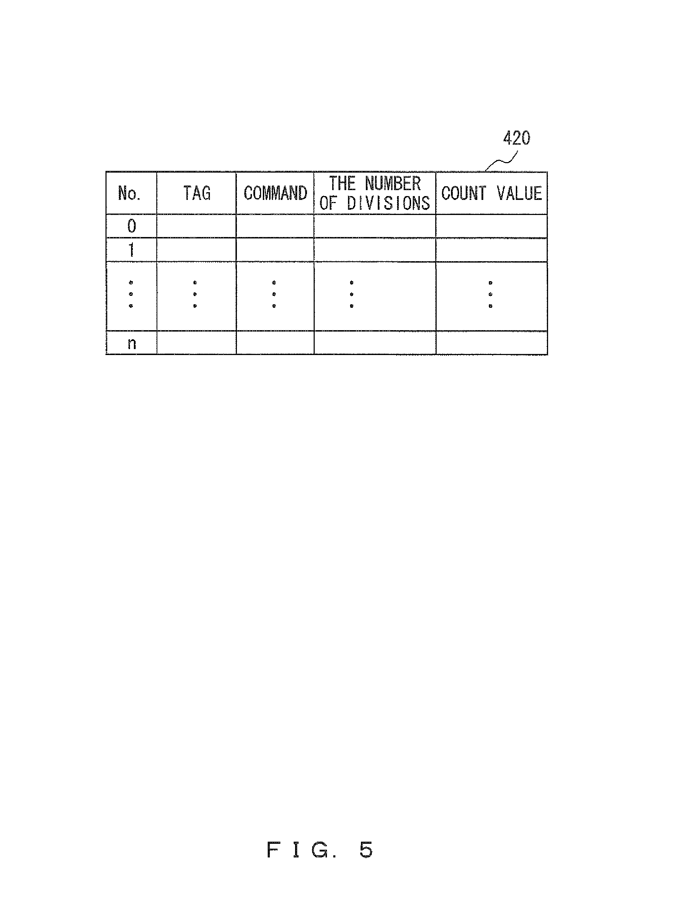

When the packet division unit 412 divides the received request into the one or more second requests, the packet division unit 412 stores packet information of received packets into the score board 420 illustrated in FIG. 5. The packet information according to the embodiment may include a command and a tag included in the received request, the number of divisions, and the like. The command includes, for example, a read instruction, a write instruction, and the like requested by the received request. The tag is identification information for identifying the received request. The number of divisions is the number of the second requests eventually obtained by dividing the received request.

The request FIFO 413 is a storage apparatus that stores packets such as the second requests output by the packet division unit 412. The request FIFO 413 stores data in the form of a FIFO. A volatile memory such as a RAM may be used as the request FIFO 413.

The transmission unit 414 sequentially transmits the second requests stored in the request FIFO 413 to the Root Complex 310.

Here, when, for example, the received request received from the end point 320 is a DMA read request to the memory 350, the second request is also a DMA read request to the memory 350. In this case, the host bridge 330 transmits, to the memory controller 340, the second request received from the Root Complex 310. The memory controller 340 reads data requested by the second request from the memory 350 and transmits a response including the read data, i.e., the second response, to the host bridge 330. When the host bridge 330 receives the second response, the host bridge 330 transmits the received second response to the Root Complex 310.

The egress processing unit 430 includes a reception unit 431, a response queue 432, a response data buffer 433, a control unit 434, and a transmission unit 435.

The reception unit 431 receives the second response from the host bridge 330. The reception unit 431 then stores a header part included in the second response into a response queue 432. The reception unit 431 stores a data part included in the second response into the response data buffer 433. The data part stored in the response data buffer 433 and the header part stored in the response queue 432 are associated with each other.

The response queue 432 achieves a queue control by storing data in the form of a FIFO. The process of storing a header part included in the second response into the response queue 432 and storing a data part included in the second response into the response data buffer 433 will be hereinafter referred to as "enqueueing" the second response to the response queue 432. In addition, obtaining the enqueued second response from the response queue 432 and the response data buffer 433 will be referred to as "dequeueing" the second response from the response queue 432.

Volatile memories such as RAM may be used as the response queue 432 and the response data buffer 433.

The control unit 434 determines the payload size of a response to be transmitted to the end point 320 in accordance with the max payload size (MPS), the reception state of the second response, and the like. This process will be described hereafter with reference to the example in FIG. 10.

On the basis of the reception state of the second response and the like, the control unit 434 detects that a packet may be issued. In this case, the control unit 434 instructs the transmission unit 435 to issue a packet.

Every time the transmission unit 435 completes the transmission of a response to the end point 320, the control unit 434 refers to the score board 420 to decrement, by one, the count value of the received request which is the division source of the second response of which transmission has been completed. The number of divisions may be used as the initial count value. When the count value becomes 0, the control unit 434 determines that transmission has been completed for a response to the received request for which the count value has become 0. The control unit 434 clears, from the score board 420, the packet information of the received request for which the response transmission has been completed.

When the transmission unit 435 receives the instruction from the control unit 434, the transmission unit 435 dequeues, from the response queue 432, the second response for which reception has been completed. The transmission unit 435 then generates a response having a payload size designated by the control unit 434. The transmission unit 435 transmits the generated response to the end point 320.

The ingress processing unit 410 described above may perform a pipeline process by connecting, in series, process elements such as a reception process of the reception unit 411, a packet division process of the packet division unit 412, and a transmission process of the transmission unit 414. In this case, a pipeline process may also be performed by further dividing the reception process of the reception unit 411, the packet division process of the packet division unit 412, and the transmission process of the transmission unit 414 into a plurality of process elements.

Similarly, the egress processing unit 430 may perform a pipeline process by connecting, in series, process elements such as a reception process of the reception unit 431 and a transmission process of the transmission unit 435. In this case, a pipeline process may also be performed by further dividing the reception process of the reception unit 431 and the transmission process of the transmission unit 435 into a plurality of process elements.

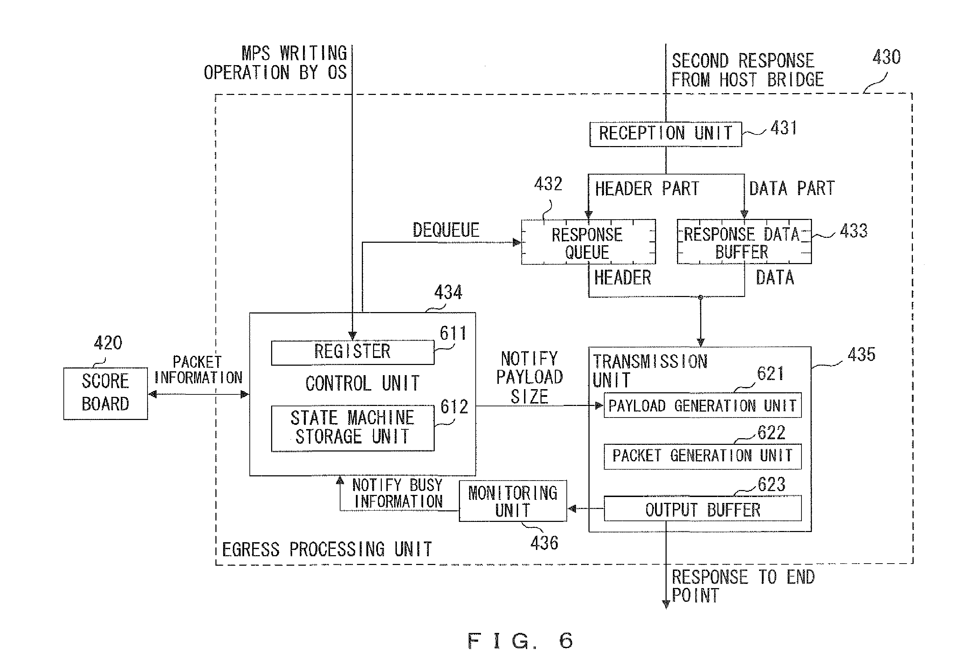

In FIG. 4, the request FIFO 413, the score board 420, the response queue 432, the response data buffer 433, and the like are separated elements; however, they may be achieved as a single memory or may be achieved as two or more memories as appropriate. This is also true for an output buffer 623 in FIG. 6.

FIG. 5 is a diagram illustrating an example of the score board 420 in FIG. 4.

The score board 420 is a storage apparatus that stores information including a tag, a command, the number of divisions, and a count value for each received-request number "No.". A volatile memory such as RAM may be used as the score board 420.

The received-request number "No." is identification information assigned to received requests in order of reception. The command is included in a received request. The tag is identification information used by the Root Complex 310 to identify a received request. The number of divisions is the number of second requests eventually obtained by dividing a received request. The count value represents the number of second requests which have not yet been transmitted as a response.

FIG. 6 is a diagram illustrating an exemplary configuration of the egress processing unit 430.

The egress processing unit 430 includes the reception unit 431, the response queue 432, the response data buffer 433, the control unit 434, and the transmission unit 435. The egress processing unit 430 further includes a monitoring unit 436.

The control unit 434 includes a register 611 and a state machine storage unit 612.

The register 611 is a storage apparatus which stores the initial value of the max payload size. The register 611 is connected to the CPU 360 directly or via, for example, the host bridge 330. An OS (Operating System) executed by the CPU 360 may write the initial value of the max payload size into the register 611.

The state machine storage unit 612 is a storage apparatus which stores a state machine table 800 including an issuance control state machine for controlling the packet issuance of a response to the end point 320. One issuance control state machine is prepared for each second response entered in the response queue 432.

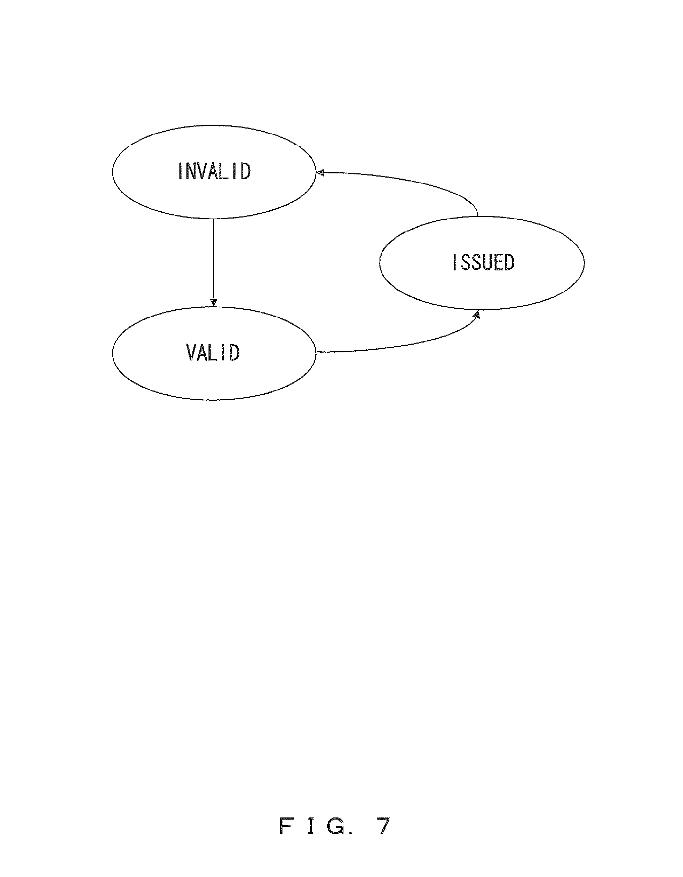

As illustrated in FIG. 7, the issuance control state machine includes three states, "valid", "invalid", and "issued". The "invalid" state is given as the initial value of the issuance control state machine.

When a second response is enqueued to the response queue 432, the control unit 434 switches an issuance control state machine for the enqueued second response from the "invalid" state to the "valid" state.

When the second response is dequeued from the response queue 432 and transmitted as a response to the end point 320, the control unit 434 switches the issuance control state machine for the dequeued second response from the "valid" state to the "issued" state.

When all second responses to second requests which are divisions of the same received request are put in the "issued" state, the control unit 434 switches issuance control state machines for these second responses from the "issued" state to the "invalid" state for initialization.

On the basis of the reception state of a second response, i.e., the state of an issuance control state machine stored in the state machine table 800, the control unit 434 determines whether or not the response can be sent to the end point 320, i.e., whether or not a packet can be issued. The control unit 434 determines the payload size on the basis of the state of an issuance control state machine stored in the state machine table 800. This process will be described hereafter with reference to FIG. 10.

When the control unit 434 determines that a packet can be issued, the control unit 434 dequeues a second response from the response queue 432 and transmits the dequeued second response to the transmission unit 435. In this case, the control unit 434 also notifies the payload size to the transmission unit 435.

The transmission unit 435 includes a payload generation unit 621, a packet generation unit 622, and an output buffer 623.

When the payload generation unit 621 receives the second response dequeued from the second response queue 432, the payload generation unit 621 generates a payload having the payload size notified by the control unit 434. The payload generation unit 621 then outputs the generated payload to the packet generation unit 622.

When the packet generation unit 622 receives the payload from the payload generation unit 621, the packet generation unit 622 generates header information to generate a response, to the end point 320, which includes the payload received from the payload generation unit 621. The packet generation unit 622 stores the generated response into the output buffer 623.

When the response is stored in the output buffer 623, the transmission unit 435 outputs, to the end point 320, the response stored in the output buffer 623.

The monitoring unit 436 monitors the output buffer 623 to detect a busy state of the transmission unit 435. When the monitoring unit 436 detects the busy state, the monitoring unit 436 generates and notifies busy information to the control unit 434. The busy information includes information which indicates whether the transmission unit 435 is in a busy state or not.

On the basis of free space of the output buffer 623, e.g., when the amount of the free space of the output buffer 623 for storing a new packet is smaller than or equal to a predetermined amount, the monitoring unit 436 may determine that the transmission unit 435 is in the busy state. Meanwhile, on the basis of the communication situation of the communication line through which packets are sent from the output buffer 623 to the end point 320, e.g., when the communication line is in the busy state, the monitoring unit 436 may determine that the transmission unit 435 is in the busy state.

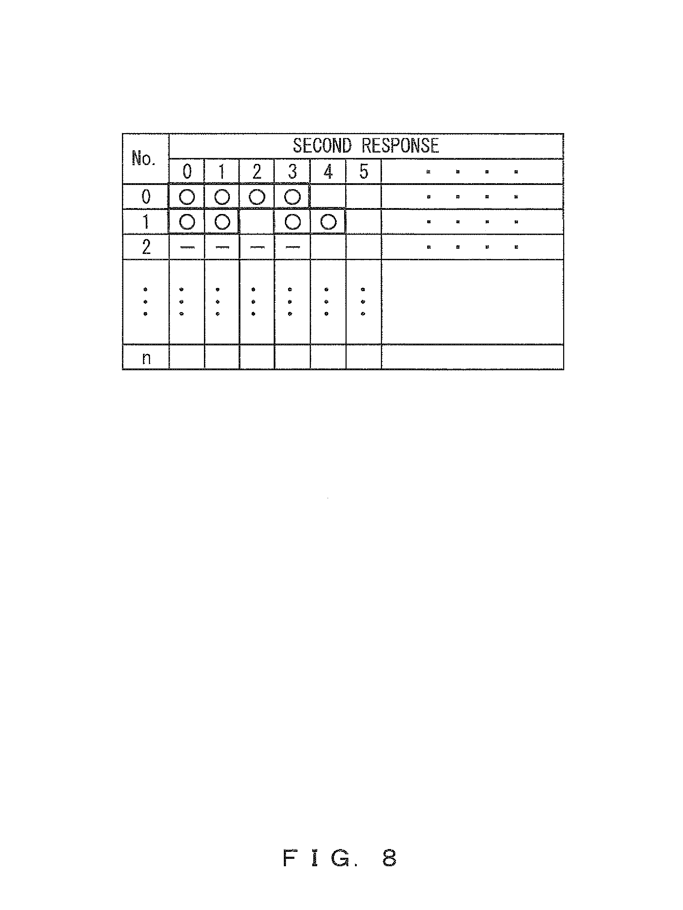

FIG. 8 is a diagram illustrating an exemplary configuration of the state machine table 800.

The state machine table 800 is information which includes a response to a received request for each of the received-request numbers "No." illustrated in FIG. 5, i.e., information which includes state machines 0, 1, 2, ··· for respective second responses 0, 1, 2, ···.

In FIG. 8, "o"indicates state machines in the "valid" state; a blank indicates state machines in the "invalid" state; and "-" indicates state machines in the "issued state".

As an example, in the state machine table 800 in FIG. 8, four consecutive state machines 0, 1, 2 and 3 at the received-request number "0" are in the "valid" state. This means that the second responses 0, 1, 2, ··· at the received-request number "0" have already been received from the host bridge 330.

Here, the second responses 0, 1, 2, ··· are responses to second requests 0, 1, 2, ···, respectively. When the second requests 0, 1, 2, ··· are requests requested by dividing data required by the first request in ascending order, one continuous data series may be obtained from data included in the data parts of the second responses 0, 1, 2, ···

When the size of data included in the data part of a second response is 128 bytes, the total size of data included in the data parts of the consecutive second responses 0, 1, 2 and 3 is 512 bytes. In this case, the control unit 434 may determine that the packets can be issued.

As described above, the state machines of the second responses are searched in ascending order with respect to the received-request numbers "No.". When the initial state machine is in the "valid" state, or the initial state machine and state machines which follow the initial state machine but do not include the last state machine are in the "issued" state and other consecutive state machines which follow these state machines are in the "valid state", and when the total size of data included in the data parts of these second responses reaches a specific payload size, then the control unit 434 may determine that the packets can be issued.

Except in a situation in which the state machines of consecutive second responses are in the "valid" state and the total size of data included in the data parts of these second responses reaches the specific payload size, the control unit 434 may determine that the packets cannot be issued.

FIG. 9 is a flowchart illustrating an outline of a packet generation process of the egress processing unit 430 illustrated in FIG. 6.

When the control unit 434 determines that a packet can be issued by referring to the state machine table 800 stored in the state machine 612, the control unit 434 starts the following processes (step S900).

In step S901, the control unit 434 dequeues, from the response queue 432, a second response of which packet can be issued. The control unit 434 outputs the dequeued second response to the transmission unit 435.

In step S902, the control unit 434 obtains busy information from the monitoring unit 436. When, for example, the output buffer 623 does not have a free space for storing a new packet, the control unit 434 may determine that the transmission unit 435 is in the busy state. In this case, the control unit 434 waits for the cancellation of the busy state. When the transmission unit 435 is not in the busy state or when the busy state is cancelled, the control unit 434 shifts the process to step S903.

In step S903, the control unit 434 determines the payload size on the basis of the state of the state machine. The control unit 434 then notifies the determined payload size to the payload generation unit 621.

In step S904, when the payload generation unit 621 receives the notification of the payload size from the control unit 434, the payload generation unit 621 generates a payload having the payload size notified from the control unit 434 from data included in the data parts of one or more dequeued second responses. The payload generation unit 621 then outputs the generated payload to the packet generation unit 622.

In step S905, the packet generation unit 622 generates header information to generate a response to the end point 320 which includes the payload received from the payload generation unit 621. The header information of the response may be generated on the basis of, for example, information included in the header part of the second response used for the payload, e.g., a destination address or the like. The packet generation unit 622 outputs the generated response to the output buffer 623.

In step S906, when the responses are stored in the output buffer 623, the transmission unit 435 sequentially transmits the responses stored in the output buffer 623 to a predetermined end point 320.

FIG. 10 is a diagram illustrating an example of a process for determining a payload size (step S903).

In step S1001, the control unit 434 determines whether the transmission unit 435 is in the busy state or not in accordance with the busy information obtained in step S902.

When the control unit 434 determines that the transmission unit 435 is in the busy state (YES in step S1001), the control unit 434 shifts the process to step S1000. In this case, as an example, the control unit 434 performs the process of step S1001 again after passage of a predetermined time period. The control unit 434 repeats the processes of steps S1000 and S1001 until the busy state of the transmission unit 435 is cancelled. While the transmission unit 435 is in the busy state, the reception unit 431 may also receive a second response from the host bridge 330 and store a header part and a data part included in this second response into the response queue 432 and the response data buffer 433, respectively. However, this is true only when the response queue 432 and the response data buffer 433 have free space.

When the control unit 434 determines that the transmission unit 435 is not in the busy state (NO in step S1001), the control unit 434 shifts the process to step S1002. In this case, the control unit 434 refers to the register 611 to obtain the max payload size.

When the max payload size is greater than or equal to 512 bytes (YES in step S1002), the control unit 434 shifts the process to step S1003. In this case, the control unit 434 determines whether a response having a payload size of 512 bytes can be generated (step S1003). As an example, when the payload size of the second response is 128 bytes, when the state machine table 800 includes four (4x128 bytes=512 bytes) or more consecutive state machines, and when the initial one of the consecutive state machines is in the "valid" state, or the initial state machine and the following state machines but not including the last state machine are in the "issued" state and other consecutive state machines which follow these state machines are in the "valid" state, then the control unit 434 may determine that a response having a payload size of 512 bytes can be generated.

When the control unit 434 determines that a response having a payload size of 512 bytes can be generated (YES in step S1003), the control unit 434 determines 512 bytes to be the payload size (step S1004).

When the control unit 434 determines that the max payload size is smaller than 512 bytes (NO in step S1002) or that a response having a payload size of 512 bytes cannot be generated (NO in step S1003), the control unit 434 shifts the process to step S1005. When the max payload size is greater than or equal to 256 bytes (YES in step S1005), the control unit 434 determines whether a response having a payload size of 256 bytes can be generated (step S1006). As an example, when the payload size of the second response is 128 bytes, when the state machine table 800 includes two (2x128 bytes=256 bytes) or more consecutive state machines, and when the initial one of the consecutive state machines is in the "valid" state, or the initial state machine and the following state machines but not including the last state machine are in the "issued" state and other consecutive state machines which follow these state machines are in the "valid" state, then the control unit 434 may determine that a response having a payload size of 256 bytes can be generated.

When the control unit 434 determines that a response having a payload size of 256 bytes can be generated (YES in step S1006), the control unit 434 determines 256 bytes to be the payload size (step S1007).

When the control unit 434 determines that the max payload size is smaller than 256 bytes (NO in step S1005) or that a response having a payload size of 256 bytes cannot be generated (NO in step S1006), the control unit 434 shifts the process to step S1008. In this case, the control unit 434 determines whether a response having a payload size of 128 bytes can be generated (step S1008). As an example, when the payload size of the second response is 128 bytes, when the state machine table 800 includes one (1x128 bytes=128 bytes) or more state machines, and when the initial one of the one or more state machines is in the "valid" state, or the initial state machine and the following state machines but not including the last state machine are in the "issued" state and other consecutive state machines which follow these state machines are in the "valid" state, then the control unit 434 may determine that a response having a payload size of 128 bytes can be generated.

When the control unit 434 determines that a response having a payload size of 128 bytes can be generated (YES in step S1008), the control unit 434 determines 128 bytes to be the payload size (step S1009).

When the control unit 434 determines that a response having a payload size of 128 bytes cannot be generated (NO in step S1008), the control unit 434 shifts the process to step S1000. In this case, when a new second response is enqueued to the response queue 432, the control unit 434 shifts the process to step S1000.

When the control unit 434 determines the payload size (steps S1004, S1007 and S1008), the control unit 434 shifts the process to step S1010. The control unit 434 then notifies the payload size to the payload generation unit 621.

When the aforementioned processes are completed, the control unit 434 terminates the process of determining the payload size (step S1011).

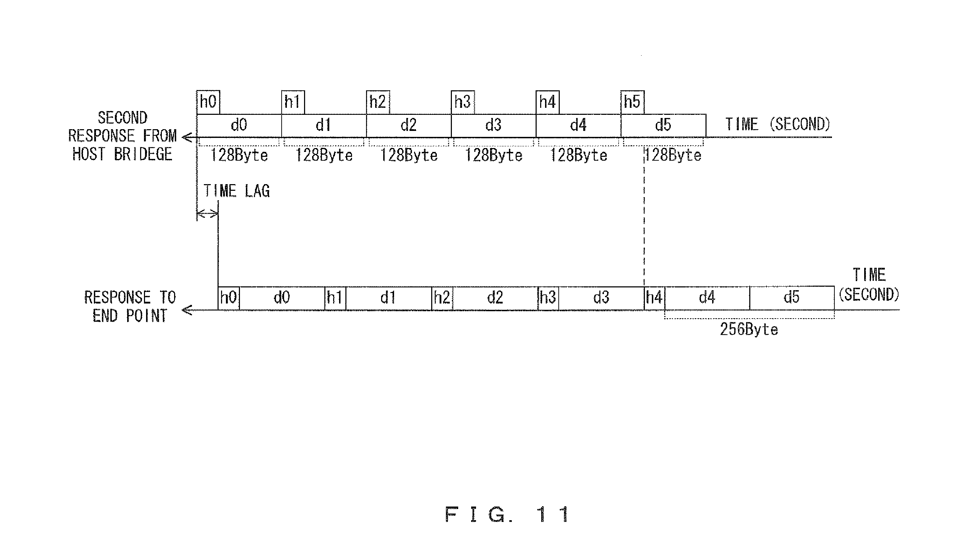

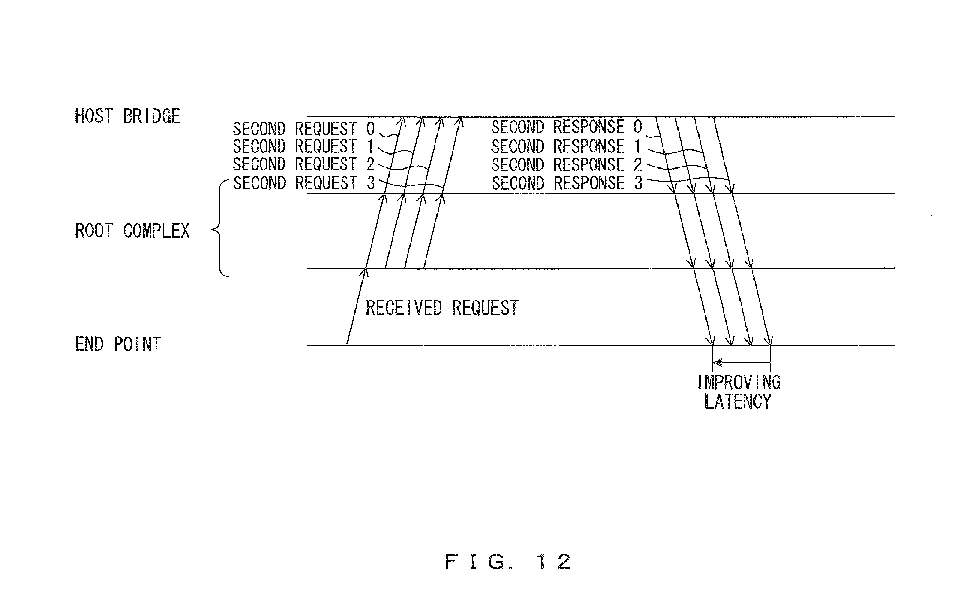

FIGs. 11 and 12 are each a diagram illustrating an example of an effect achieved by a data transfer process according to the embodiment.

In FIG. 11, h0, h1, h2, ··· indicate data included in the header parts of second responses 0, 1, 2, ··· sent from the host bridge 330. Also in FIG. 11, d0, d1, d2, ··· indicate data included in the data parts of the second responses 0, 1, 2, ··· sent from the host bridge 330.

When buses between the host bridge 330 and the Root Complex 310 are parallel buses, second responses from the host bridge 330 are sent in parallel through the buses assigned specifically for the data of the header part and the data of the data part of the second response, as illustrated in FIG. 11.

Meanwhile, when buses between the Root Complex 310 and the end point 320 are serial buses, the Root Complex 310 transfers second responses received from the host bridge 330 to the end point 320 in order of reception.

In the following, explanations will be given under the condition that the payload sizes of the second responses 0, 1, 2, ··· received from the host bridge 330 are each 128 bytes. However, this is merely an illustration, and hence it is not intended that the payload size be limited to 128 bytes.

As an example, when the reception of the header part of the second response 0 is completed, the state of a state machine for the second response 0 becomes the "valid" state. In this case, even if the max payload size is set to 512 bytes, 256 bytes, or the like, the Root Complex 310 changes the payload size of a response to the end point 320 to 128 bytes (YES in step S1008, step S1009). The Root Complex 310 then starts to transmit the received second response as a response to the end point 320.

Similarly, when the reception of the header parts of the second responses 1, 2 and 3 from the host bridge 330 is completed at the Root Complex 310, the states of state machines for the second response 1, 2 and 3 become the "valid" state. In this case, when the Root Complex 310 receives the second responses 1, 2 and 3 from the host bridge 330, the Root Complex 310 sequentially transmits the received second responses as responses to the end point 320 as illustrated in FIG. 12.

As described above, the Root Complex 310 does not fix the payload size of a response to the end point 320 at the max payload size but decreases the payload size in accordance with the reception state of the second response. Accordingly, there is no need to wait until the total size of data of second responses received from the host bridge 330 becomes the max payload size. As a result, the Root Complex 310 may reduce the latency caused when the Root Complex 310 transfers, to the end point 320, a second response received from the host bridge 330.

As described above, the Root Complex 310 may improve latency which is caused when data is transferred.

When the Root Complex 310 transmits the second response 4 received from the host bridge 330 to the end point 320, the Root Complex 310 has already finished the reception of the header parts of the second responses 4 and 5 from the host bridge 330. In this case, the states of state machines for the consecutive second responses 4 and 5 are each the "valid" state. In this case, the control unit 434 determines that the payload size of the response is 256 bytes (YES in step S1006, S1007).

In this case, the Root Complex 310 generates and transmits, to the end point 320, 256 bytes of payload which includes data d4 of the data part of the second response 4 received from the host bridge 330 and data d5 of the data part of the second response 5 received from the host bridge 330.

In this way, the Root Complex 310 increases the payload size in accordance with the reception state of the second response. Then the percentage of data within the buses increases. As a result, the buses between the Root Complex 310 and the end point 320 may be used efficiently, thereby improving the throughput.

In the descriptions above, the host bridge 330 may be an example of the first apparatus. The end point 320 may be an example of the second apparatus. The response queue 432 and the response data buffer 433 may each be an example of the first storage unit which stores the first data sent from the first apparatus. The state machine table 800 may be an example of the management information which manages the transmission state of the transmission of the first data stored by the first storage unit to the second apparatus. The state machine 612 may be an example of the second storage unit which stores the management information. The payload size may be an example of the size of the second data to be transmitted to the second apparatus in accordance with the transmission state of the transmission of the first data to the second apparatus. The control unit 434 may be an example of the determination unit which dynamically determines the size of the second data to be transmitted to the second apparatus in accordance with the transmission state of the transmission of the first data to the second apparatus. The transmission unit 435 may be an example of the transmission unit which generates and transmits, to the second apparatus, the second data having a size such that one or more pieces of the first data are included.

As described above, in one aspect, the disclosed data transfer apparatus may improve latency at the time of data transfer.

The procedure of the process illustrated in the flowcharts in FIGS. 9 and 10 is not intended for limiting the order of the processes. Therefore, it is obvious that the order of the processes may be changed if needed.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A data transfer apparatus (310) for transferring data sent from a first apparatus to a second apparatus, the data transfer apparatus comprising:
a first storage unit (432, 433) to store first data sent from the first apparatus;
a second storage unit (612) to store management information (800) which manages a transmission state of transmission of the first data stored by the first storage unit to the second apparatus;
a determination unit (434) to dynamically determine a size of second data to be transferred to the second apparatus in accordance with the transmission state; and
a transmission unit (435) to generate and transmit, to the second apparatus, the second data of the determined size which includes one or more pieces of the first data.

2. The data transfer apparatus according to claim 1, wherein
the determination unit determines the size of the second data using a data size of the first data stored by the first storage unit and the transmission state of the transmission of the first data to the second apparatus.

3. The data transfer apparatus according to claim 1, further comprising
a detection unit to detect a busy state of the transmission unit, wherein
while the detection unit is detecting the busy state of the transmission unit, the first data sent from the first apparatus is stored in the first storage unit.

4. The data transfer apparatus according to claim 1, further comprising
a transmission unit, wherein, when the transmission unit receives a first request from the second apparatus, then, in order to divide data requested by the first request into divisions each having a predetermined size and request the divided data, the transmission unit divides the first request into one or more second requests and transmits the one or more second requests to the first apparatus.

5. The data transfer apparatus according to claim 4, wherein
the first data, which is transmitted by the first apparatus, is a response to the second request.

6. A data transfer method for transferring data sent from a first apparatus to a second apparatus, the data transfer method comprising:
obtaining a transmission state of transmission of first data sent from the first apparatus and stored in a first storage unit to the second apparatus, from a second storage unit storing management information which manages the transmission state;
dynamically determining a size of second data to be transferred to the second apparatus in accordance with the transmission state; and
generating and transmitting, to the second apparatus, the second data of the determined size which includes one or more pieces of the first data.

7. An information processing apparatus which includes a data transfer apparatus for transferring data sent from a first apparatus to a second apparatus, wherein
the data transfer apparatus comprises:
a first storage unit to store first data sent from the first apparatus;
a second storage unit to store management information which manages a transmission state of transmission of the first data stored by the first storage unit to the second apparatus;
a determination unit to dynamically determine a size of second data to be transferred to the second apparatus, in accordance with the transmission state; and
a transmission unit to generate and transmit, to the second apparatus, the second data of the determined size, which includes one or more pieces of the first data.
